Europäisches Patentamt

(19) European Patent Office

Office européen des brevets

(11) Numéro de publication: **0 312 448 B1**

(12) **FASCICULE DE BREVET EUROPEEN**

(45) Date de publication du fascicule du brevet:
22.11.90

(51) Int. Cl.⁵: **F16F 3/08, B60G 25/00**

(21) Numéro de dépôt: 88402571.9

(22) Date de dépôt: 11.10.88

(54) **Support élastique à rigidités anisotropes.**

(30) Priorité: 12.10.87 FR 8714048
15.12.87 FR 8717485

(43) Date de publication de la demande:
19.04.89 Bulletin 89/16

(45) Mention de la délivrance du brevet:
22.11.90 Bulletin 90/47

(84) Etats contractants désignés:
DE ES FR GB IT SE

(56) Documents cités:
EP-A- 0 069 787
FR-A- 2 479 390
GB-A- 500 004

(73) Titulaire: HUTCHINSON, 2 rue Balzac, F-75008 Paris(FR)

(72) Inventeur: Domer, Michel, La Cour aux Fleurs, Pouilly
F-60970 Valdampierre(FR)

(74) Mandataire: Behaghel, Pierre et al, CABINET
PLASSERAUD 84 rue d'Amsterdam, F-75009 Paris(FR)

## Description

La présente invention concerne un support élastique à rigidités anisotropes, à savoir possédant dans deux directions perpendiculaires l'une à l'autre --et appartenant au même plan-- des rigidités notablement différentes, ce support comportant deux armatures propres à être fixées respectivement aux organes entre lesquels il est destiné à être intercalé.

De tels supports peuvent être utilisés par exemple dans les systèmes de suspension des véhicules automobiles, entre la caisse et le train de suspension avant ou arrière, et sont destinés à isoler la caisse des vibrations de roulement provenant du train de suspension.

Ces supports doivent avoir une grande rigidité transversale pour éviter de trop grands déplacements transversaux de la caisse par rapport aux roues en virage et assurer une bonne tenue de route du véhicule. Par contre, ils doivent avoir une faible rigidité dans la direction horizontale perpendiculaire à la précédente, c'est-à-dire dans la direction longitudinale du véhicule, pour l'obtention du meilleur filtrage possible des vibrations de roulement.

Dans ce type d'application aux systèmes de suspension des véhicules, on comprend en outre que ces supports doivent encaisser des efforts verticaux, puisqu'ils doivent supporter la caisse ; dans cette direction verticale, perpendiculaire aux deux précédentes, la rigidité doit être moyenne.

Pour résoudre le problème ainsi posé, on a envisagé dans le passé de mettre en oeuvre un guidage longitudinal à billes, de même interposé entre la caisse et le système de suspension; cependant cette solution n'est pas satisfaisante car elle n'assure pas un filtrage correct, et le dispositif est en outre exposé aux projections de boue et autres, qui peuvent être la source de couinements.

Une autre solution consiste à disposer entre les deux dites armatures un bloc de matière élastique de rigidité appropriée et feuilletée par des plaques métalliques en direction longitudinale, à savoir la direction à faible rigidité dans laquelle le support travaille en cisaillement, ce support travaillant en compression ou en traction dans la direction transversale perpendiculaire à la précédente.

Cette disposition confère au bloc de matière élastique une plus grande rigidité dans cette dernière direction, mais le rapport entre ces deux rigidités n'est pas encore suffisant.

Le but de la présente invention est de résoudre le problème d'une façon plus satisfaisante que par le passé, et ceci en évitant le frottement d'un guidage positif dans la direction de la faible rigidité, perpendiculaire à celle de la forte rigidité.

A cet effet, un support élastique du type général mentionné au début sera, conformément à la présente invention, essentiellement caractérisé en ce qu'il comporte entre lesdites armatures au moins une bielle rigide à partie centrale de préférence plate, cette bielle pouvant pivoter autour d'un axe de symétrie perpendiculaire à ladite partie centrale, la direction générale de cette bielle étant transversale, à savoir -- ledit support étant supposé au repos-- étant celle de la plus forte rigidité, aux deux extrémités opposées de cette bielle étant prévues des articulations de butée propres à la relier respectivement à l'une et à l'autre desdites armatures de sorte que ces extrémités puissent s'articuler sur elles au moins selon des axes perpendiculaires au plan précité, lorsque les deux armatures, sous l'effet des forces qui leur sont appliquées, se déplacent l'une par rapport à l'autre dans la direction de plus faible rigidité, un plot central à faible rigidité en torsion, traversé par ladite bielle et adhérisé de part et d'autre de celle-ci, ayant ses deux extrémités opposées respectivement adhérisées auxdites armatures, assurant alors ladite faible rigidité dans cette direction lors du pivotement de la bielle, tandis que la forte rigidité dans la direction perpendiculaire à la précédente est assurée essentiellement par la rigidité en direction axiale de ladite bielle, par suite de la mise en butée de ses extrémités opposées respectives, au niveau desdites articulations, sur les armatures correspondantes.

Selon un mode de réalisation particulier de l'invention, lesdites articulations comprennent un bloc de matière élastique annulaire adhérisé entre une surface de révolution prévue à l'extrémité de la bielle et une surface de révolution coaxiale solidaire de l'armature correspondante, ce bloc élastique étant ainsi adapté à subir, soit une compression ou une traction dans la direction générale de la bielle lorsque, sous l'influence d'efforts extérieurs, les deux dites armatures se déplacent l'une par rapport à l'autre dans cette direction, soit une torsion, par suite de la rotation de la bielle, lorsque les deux dites armatures se déplacent l'une par rapport à l'autre dans une direction perpendiculaire à la précédente et située dans le même plan.

Un bloc de matière élastique annulaire suffisamment mince et de diamètre relativement grand par rapport à son épaisseur permettra facilement, ainsi, d'obtenir le résultat souhaité, à savoir une rigidité beaucoup plus grande en direction transversale, lorsque l'extrémité de la bielle exercera sur ledit bloc une traction ou une compression, que dans la direction perpendiculaire à la précédente, lorsque, la bielle pivotant, son extrémité soumettra ledit bloc de matière élastique à une torsion. Cela sera d'ailleurs mieux vu par la suite, à l'aide du dessin.

De préférence, ladite surface de révolution prévue aux extrémités de la bielle est élaborée sous la forme d'un plot, la surface de révolution coaxiale et solidaire de l'armature correspondante ayant alors la forme d'une cuvette, plot et cuvette étant avantageusement de forme conique.

Ainsi, on peut facilement, au montage, soumettre le bloc de matière élastique - adhérisé entre le plot et la cuvette - à une précontrainte permettant d'en améliorer la tenue en cours d'utilisation.

Etant donné les caractéristiques qui précèdent, on peut avantageusement prévoir que la bielle est constituée d'une tôle emboutie, une cavité apparaissant alors à l'opposé du plot prévu à chacune de ses extrémités.

Cette possibilité de réaliser la bielle par un simple emboutissage de tôle permet d'abaisser le prix de revient.

On peut aussi mettre à profit la cavité, à chaque extrémité de la bielle, en la remplissant de matière élastique, ce qui constitue butée de limitation de course avec l'armature opposée. Cette matière élastique de remplissage empêche aussi que des saletés ne s'accumulent dans les cavités, ce qui autrement pourrait être générateur de corrosion.

Quant au plot central, de préférence cylindrique pour faciliter la torsion et le cisaillement, il permettra de positionner la bielle par rapport aux armatures, et prendra la plus grande partie de la charge statique dans la direction perpendiculaire à la direction de forte rigidité et à la direction de faible rigidité. La bielle servira alors avantageusement de feuilletage à ce plot central.

On peut encore prévoir des butées de fin de course en matière élastique entre des rebords appropriés des deux armatures, pour en limiter les déplacements relatifs dans la direction à faible rigidité.

Selon un autre mode de réalisation basé sur le même principe général, on peut encore prévoir que ladite bielle comporte à ses extrémités deux logements cylindriques propres à recevoir des articulations élastiques, lesquelles sont constituées chacune de deux bagues métalliques coaxiales, une bague extérieure et une bague intérieure, entre lesquelles est adhérisée une bague de matière élastique, ladite bague extérieure étant calée en rotation dans le logement cylindrique correspondant de ladite bielle tandis que la bague intérieure est calée en rotation sur une armature. Avantageusement, lesdites armatures sont constituées chacune d'un étrier à forte rigidité transversale, engagé sur une queue de fixation d'un plot central, entre deux ailes duquel étrier est rivetée ou boulonnée ladite bague intérieure de l'articulation élastique correspondante.

Les supports qui viennent d'être décrits assurent une grande rigidité transversale dans les deux sens. Or il n'est en général nécessaire d'assurer cette grande rigidité transversale que dans un seul sens pour chaque support, puisque sur les véhicules les supports sont associés par paires, et en opposition, l'un pouvant alors assurer la rigidité dans un sens et l'autre dans l'autre sens. C'est à partir de cette constatation que l'on a pu imaginer d'autres solutions plus économiques mais encore basées sur les mêmes principes généraux.

Pour ce faire, un support élastique à rigidités anisotropes du type général défini au début sera, conformément à une variante de la présente invention, caractérisé en ce que ladite bielle comporte à chacune de ses extrémités, et s'étendant de part et d'autre du plan de sa partie centrale, une portée en forme de surface de révolution dont l'axe est confondu avec ledit axe de symétrie de la bielle, un revêtement mince de matière élastique de roulement étant adhérisé entre la surface extérieure de cette portée et un rebord plan de l'armature correspondante, lequel rebord est orienté dans la direction selon laquelle le support doit présenter la plus faible rigidité.

Le revêtement de matière élastique étant adhérisé à la fois à la portée de la bielle et audit rebord, on comprend que ledit roulement s'effectuera sans frottement, ce que élimine tout problème d'usure ou de couinements au cours du fonctionnement.

On comprend aussi que la nouvelle structure proposée permet de résoudre le problème posé et notamment de simplifier la fabrication, en particulier en éliminant les cuvettes ou analogues nécessaires, dans les modes de réalisation précédents, à la réalisation des articulations aux extrémités de la bielle.

Quant au fonctionnement d'un tel support, on comprend que la forte rigidité transversale dans un sens sera acquise par une mise en compression des minces revêtements de matière élastique aux extrémités de la bielle, lors du rapprochement l'un de l'autre des rebords des deux armatures ; dans l'autre sens transversal, cette forte rigidité sera acquise par l'autre support de la paire de supports, qui sera disposé symétriquement par rapport du précédent et qui travaillera exactement de la même façon mais en opposition.

La faible rigidité en direction longitudinale sera acquise quant à elle par le pivotement de la bielle autour de son axe central, et par le roulement consécutif de ses deux revêtements extrêmes sur les rebords correspondants des armatures respectives.

L'élasticité du support dans la direction perpendiculaire aux directions transversale et longitudinale, c'est-à-dire, en principe, dans la direction verticale, pourra bien entendu être assurée, comme dans le cas des supports précédents, en noyant dans un plot de matière élastique reliant les deux armatures, la partie centrale de la bielle. Ce plot pourra être de forme parallélépipédique, mais il sera avantageusement cylindrique.

Ce plot central permettra de maintenir une faible rigidité longitudinale en travaillant en cisaillement et en torsion.

Selon une variante, ladite surface de révolution est une portion de cylindre, ladite bielle étant constituée d'une tôle plate aux extrémités de laquelle sont soudées deux portées en portion de cylindre, et le rebord étant plan.

Selon une autre variante, ladite surface de révolution est biconique, ladite bielle étant constituée de deux tôles superposées soudées ensemble, et dont chaque extrémité est repliée vers l'intérieur sous la forme d'une portion de cône.

Pour éviter un couinement dû à un frottement par suite du déplacement vertical relatif des surfaces en contact au niveau des articulations, à savoir aux extrémités de la bielle, sous l'effet des efforts verticaux s'exerçant sur le support, on peut bloquer ces extrémités en vertical. Pour ce faire, le support peut encore être caractérisé en ce que ladite surface de révolution est en forme de calotte sphérique, le rebord étant recourbé vers l'intérieur selon une forme en portion de cylindre ou analogue.

Selon encore une autre variante reprenant la même idée que ci-dessus, mais avec une bielle de réalisation simplifiée, un support conforme à l'invention peut encore être caractérisé en ce que ladite bielle est constituée d'une barre rigide dont les extrémités opposées sont de forme arrondie, et en ce que lesdites armatures ont la forme de cuillers disposées tête-bêche, dont les parties principales respectives constituent les parties de fixation des armatures, et dont des rebords respectifs recourbés vers l'intérieur, dans le creux desquels viennent se caler les extrémités correspondantes de la bielle, constituent avec ces dernières les susdites articulations de butée.

Cette barre peut avantageusement posséder une partie centrale aplatie noyée dans ledit plot central à faible rigidité en torsion.

Différents modes d'exécution de l'invention vont maintenant être décrits à titre d'exemples nullement limitatifs, avec référence aux figures du dessin annexé dans lequel :

- la figure 1 est une vue en coupe longitudinale d'un support conforme à l'invention ;
- la figure 2 est une vue de dessus du support de la figure 1 ;
- la figure 3 est une vue en coupe transversale à échelle réduite du même support ;
- la figure 4 est une vue éclatée d'un autre support élastique conforme à l'invention ;
- la figure 5 est une vue en élévation de ce support, représenté sous charge statique ;
- la figure 6 est une vue en coupe longitudinale et verticale d'encore un autre support élastique conforme à l'invention ;
- la figure 7 est une vue en coupe horizontale selon la ligne VII-VII de la figure 6 ;
- la figure 8 est une vue en coupe transversale selon la ligne VIII-VIII de la figure 7 ;
- la figure 9 est une vue analogue à celle de la figure 6, montrant des variantes de réalisation du support ;
- la figure 10 représente le support de la figure 9 dans une vue en coupe transversale selon la ligne X-X de la figure 9 ;
- la figure 11 est une vue analogue à celle de la figure 9, montrant encore d'autres variantes de réalisation du support de la figure 6 ;
- la figure 12 montre encore un autre type de support conforme à l'invention en coupe longitudinale verticale ;
- la figure 13 montre la bielle en perspective ; et
- la figure 14 est une vue en plan du support de la figure 12.

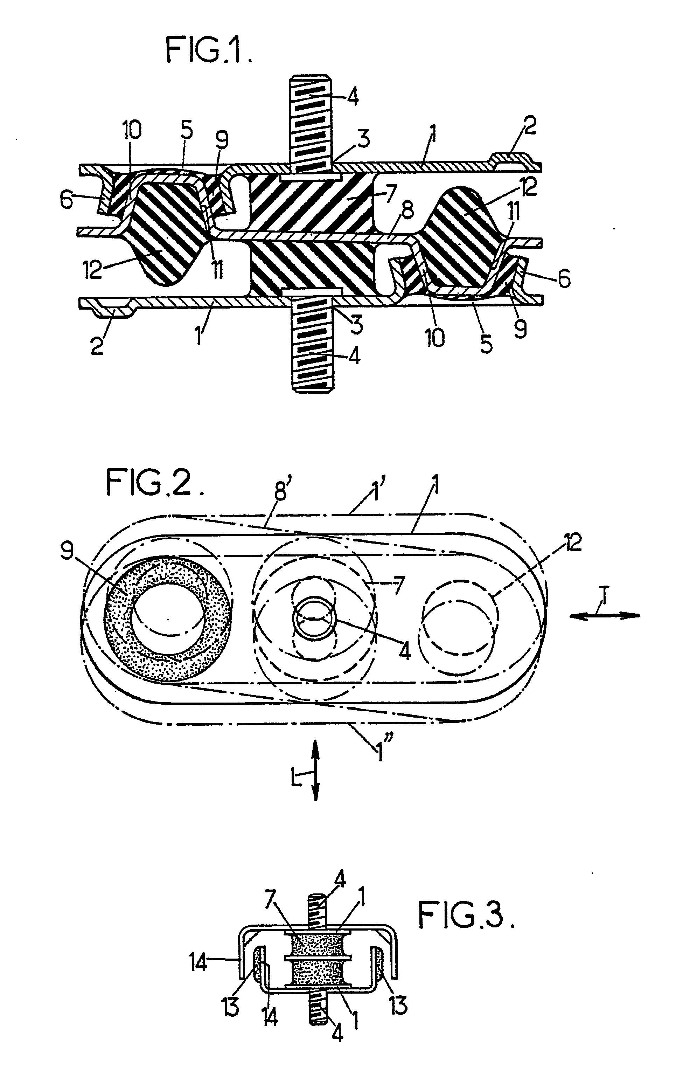

Sur les figures 1 et 2 on a référencé en 1 les deux armatures parallèles du support.

Il s'agit en l'occurrence de plaques de tôle emboutie et perforée dont la forme en plan est visible à la figure 2 et qui comportent chacune une saillie de positionnement et de maintien 2, un trou central 3 pour une vis de fixation 4, et un trou excentré 5 dont le bord évasé et conique constitue une cuvette 6. Les armatures 1 sont reliées par un plot central 7 en matière élastique, auxquelles il est adhérisé par ses extrémités ; dans ces extrémités sont noyées les têtes des vis précitées 4.

Une bielle 8 en tôle emboutie, dont la forme générale en plan est la même que celle des armatures 1, est disposée entre celles-ci et est articulée élastiquement, par ses extrémités, à l'une et à l'autre de ces armatures. Pour ce faire, un bloc de matière élastique annulaire 9 est adhérisé, à chaque extrémité de la bielle 8, entre la cuvette précitée 6 et un plot de forme conique 10 ménagé par emboutissage aux extrémités de ladite bielle. Cette bielle traverse le plot central 7, qui se trouve ainsi constitué de deux sections, adhérisées chacune entre les surfaces en regard de la bielle 8 et de l'armature 1 correspondante.

Enfin, chaque cavité 11 apparaissant à l'opposé des plots 10 de la bielle 8 est emplie d'un bloc de matière élastique adhérisée 12 pouvant constituer une butée avec l'armature correspondante 1 en cours de fonctionnement, limitant ainsi le rapprochement des armatures 1 du fait de la charge appliquée perpendiculairement à leur plan.

Il est à noter ici que le dimensionnement relatif des blocs élastiques 7 et 9 est tel qu'en l'absence de cette charge, la bielle 8 est légèrement inclinée, comme visible sur la figure 1, dans une mesure telle que la charge nominale appliquée sur les armatures 1 la ramène en position parallèle à ces armatures. Ainsi, lorsque les armatures 1 seront soumises à des efforts transversaux dans un sens ou dans l'autre, dans la direction transversale indiquée par les flèches T de la figure 2, la bielle 8 sera soumise à des efforts de traction ou de compression s'exerçant dans son plan et selon son axe principal. Les blocs 9, d'épaisseur réduite, travaillant alors uniquement en traction ou en compression et donc avec une raideur élevée, le déplacement relatif des armatures 1 dans cette direction T sera extrêmement réduit.

Pour ne pas alourdir le dessin, on n'a pas représenté un tel déplacement sur la figure 2. Par contre, on a montré, en 1′ et 1″ le déplacement relativement important que peuvent subir les armatures 1 sous l'effet d'efforts s'exerçant sur elles dans la direction L perpendiculaire à la direction T. Dans ce cas, on voit que les blocs 9 travaillent essentiellement en torsion, ce qui autorise un pivotement notable de la bielle 8 jusqu'à la position 8′, et donc le déplacement relativement important précité des deux armatures 1 dans la direction L.

On atteint donc bien le but fixé, à savoir l'obtention d'un support élastique dont la rigidité dans une direction (T) est notablement plus élevée que dans la direction perpendiculaire (L) située dans le même plan.

Si l'on souhaite limiter les débattements dans cette dernière direction, on peut prévoir des butées latérales 13, comme représenté sur la figure 3. Ces butées peuvent être constituées de blocs de matière élastique adhérisés entre des rebords en regard 14 des deux armatures.

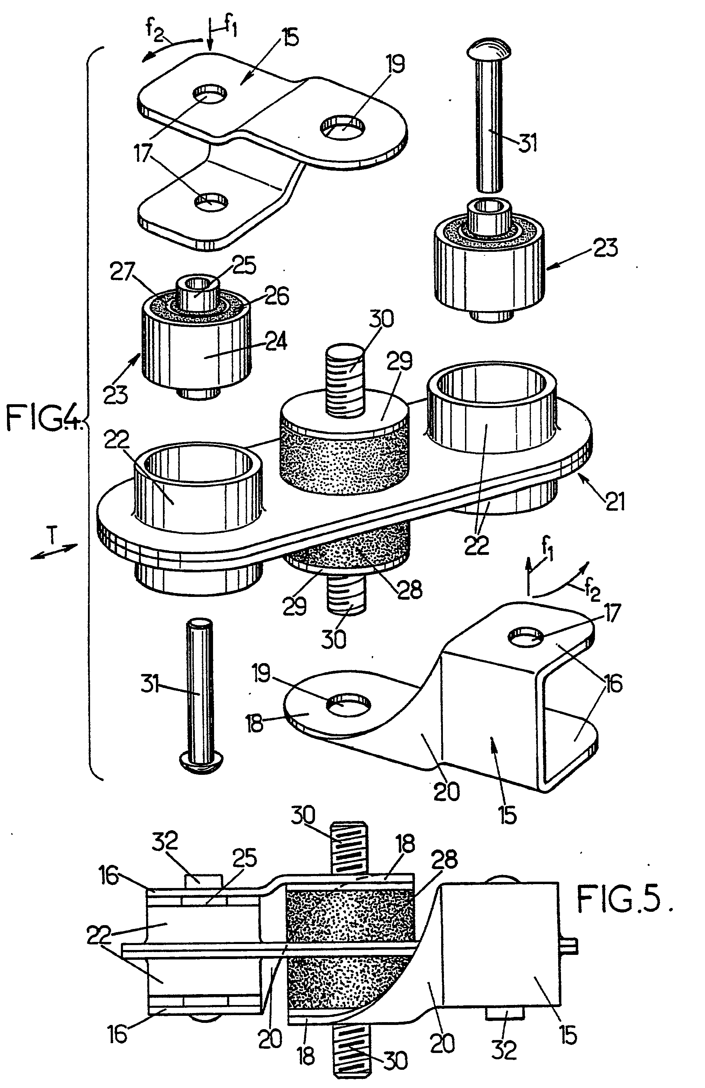

Le support élastique représenté sur les figures 4 et 5 est du même type général que celui des figures 1 à 3. La réalisation en est cependant différente. Les armatures ont été référencées 15 et sont constituées chacune d'une sorte d'étrier rigide comportant deux ailes parallèles et se faisant face 16, percées de trous alignés 17, et une troisième aile 18, prolongeant l'une des précédentes et percée d'un trou 19. Ces étriers comportent avantageusement un voile de rigidification 20 propre à augmenter encore leur rigidité dans la direction transversale T après montage.

La bielle rigide de direction générale transversale a été référencée 21 et est constituée de deux tôles opposés éventuellement soudées et pourvues chacune de deux crevés cylindriques 22. L'alignement de ces crevés deux à deux constitue deux logements aux extrémités de la bielle 21 propres à recevoir les articulations élastiques 23. Chaque articulation 23 est constituée de deux bagues métalliques coaxiales, extérieure 24 et intérieure 25, entre lesquelles est adhérisée une bague de caoutchouc 26 feuilletée par une bague intermédiaire 27. Ce feuilletage ainsi que la hauteur relativement grande de chaque bague de caoutchouc 26 (appelée dans ce qui précède "bloc de matière élastique annulaire") permettront, par rapport au support de l'exemple précédent, d'augmenter notablement la rigidité transversale du support, sans augmenter très sensiblement sa rigidité dans la direction longitudinale.

Quant au plot central en matière élastique, destiné à encaisser les efforts verticaux s'exerçant sur les armatures, il est référencé 28 et constitué de deux demi-plots adhérisés entre la bielle 21 et deux plaques circulaires 29 portant des queues de fixation filetées 30.

Ceci étant, la figure 4 montre bien comment le montage de ces différentes pièces peut être effectué : on emmanche à force les bagues 24 des articulations 23 dans les crevés 22 de la bielle, puis on engage comme indiqué par les flèches f₁, les trous 19 des étriers 15 sur la queue filetée correspondante 30, les étriers étant pivotés à l'écart de la bielle 21, comme représenté sur la figure. Ensuite, on fait pivoter, autour des queues 30, les étriers 15 dans le sens des flèches f₂, pour aligner leurs trous 17 avec les passages axiaux respectifs des bagues intérieures 25 des articulations. Des rivets ou boulons de serrage 31 engagés dans les bagues 25 permettront enfin d'assurer le positionnement définitif des étriers, et de caler en rotation, par rapport à eux, les bagues intérieures 25 des articulations.

On voit sur la figure 5 que les extrémités rivetées 32 des rivets 31 sont en saillie par rapport au plan de la surface extérieure de l'aile correspondante 18 de chaque étrier. Cela permet de constituer des butées de calage en rotation du support, ayant le même rôle que les saillies 2 de la figure 1. Au cas où les rivets 31 seraient remplacés par des boulons, le écrous de serrage pourraient remplir encore le même rôle.

Sans avoir besoin d'en faire la démonstration, on voit facilement qu'un tel support élastique fonctionnera essentiellement de la même façon que celui de l'exemple précédent. Il permettra toutefois, et pour la raison indiquée plus haut, d'obtenir des rapports de rigidités encore supérieurs.

Le support des figures 1 à 3 pourra présenter un rapport de 50/1 entre la rigidité transversale et la rigidité longitudinale.

Pour celui des figures 4 et 5, on peut raisonnablement escompter atteindre un rapport de 100/1 (environ 1000 daN/mm en transversal, et environ 10 daN/mm en longitudinal).

Ces chiffres sont à comparer aux rapports de rigidités couramment obtenus avec les supports classiques à feuilletage, qui sont de l'ordre de 10/1.

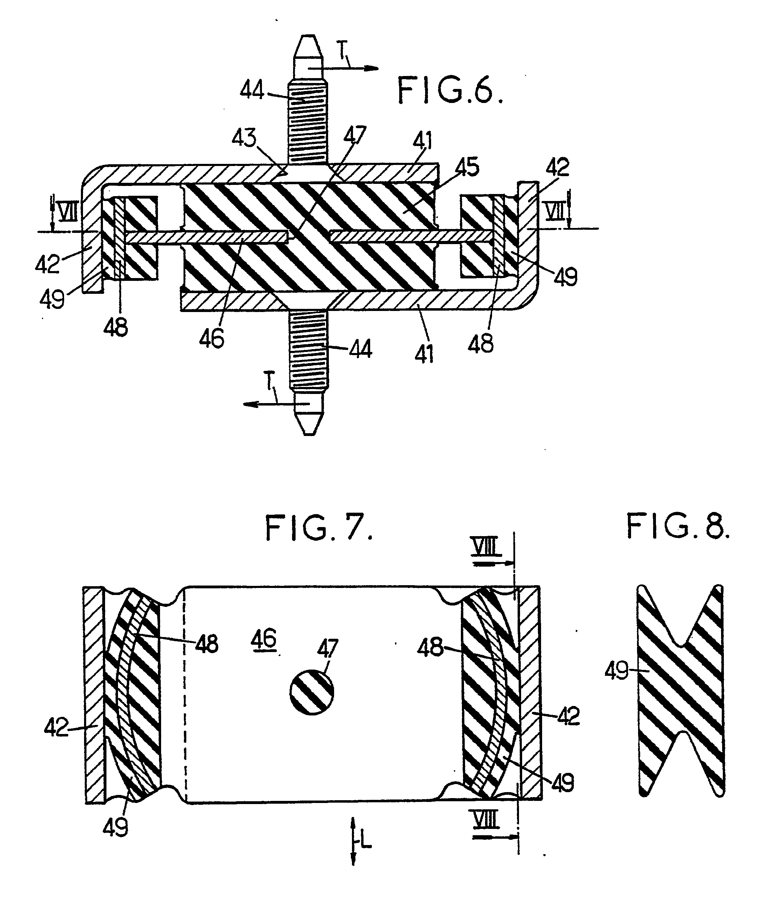

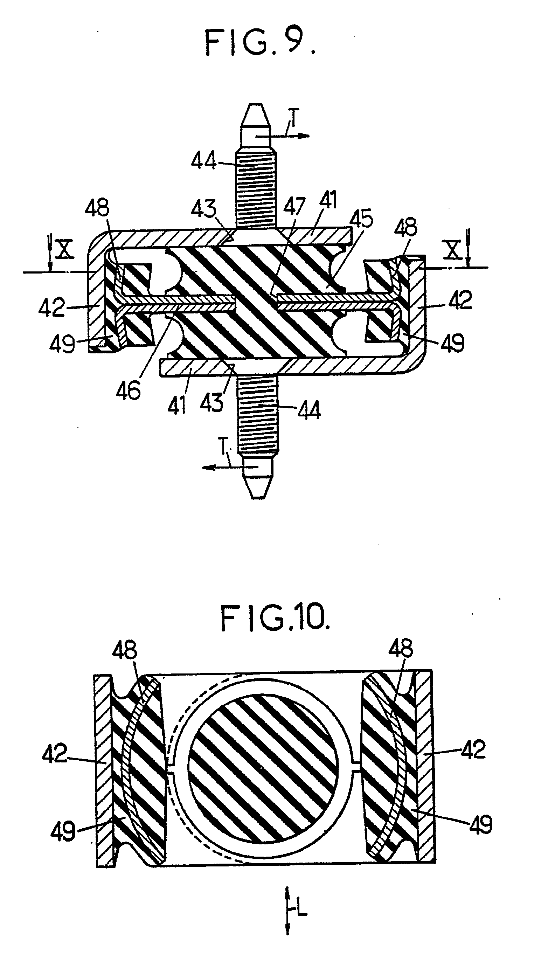

Sur les figures 6 à 10, on a référencé en 41 les armatures parallèles des supports. Il s'agit de tôles embouties comportant chacune un bord tombé ou rebord 42 plan, orienté dans la direction longitudinale L (voir figures 7 et 10), et un trou central 43, chacun prévu pour une vis de fixation 44. Les armatures sont reliées par un plot central 45 en matière élastique, auxquelles il est adhérisé par ses extrémités. Dans ce plot est noyée la partie centrale plane d'une bielle 46 parallèle aux deux armatures. En 47 est représenté un trou central permettant l'équilibrage des pressions de la matière élastique de part et d'autre de la bielle lors du moulage.

Le bielle 46 de chaque mode de réalisation comporte à chacune de ses extrémités une portée 48 cylindrique (figures 6 et 7) ou légèrement biconique (figures 9 et 10), s'étendant de part et d'autre de la partie centrale de la bielle et dont l'axe est confondu avec l'axe de symétrie de celle-ci. Dans le mode de réalisation des figures 6 et 7, la bielle 46 est constituée d'une tôle unique et les portées 48, qui sont des portions de cylindre, sont soudées perpendiculairement en bout. Dans le cas des figures 9 et 10, la bielle 46 est constituée de deux tôles superposées soudées ensemble, et dont chaque extrémité est repliée vers l'intérieur pour présenter la forme d'une portion de cône.

Entre la surface extérieure de chaque portée 48 et la surface plane en regard du rebord 42 correspondant est adhérisé un revêtement mince de matière élastique de roulement, référencé 49. Ce revêtement est adhérisé de préférence par toute sa surface sur la portée 48 correspondante, mais seulement par sa partie centrale sur le rebord de l'armature. Il est à noter que la forme en coupe transversale, montrée sur la figure 8, des revêtements 49, n'est pas obligatoire : les quatre ailes latérales en V pourraient être supprimées.

Il est à noter par ailleurs que dans le cas des figures 6 à 8 le plot central 45 est parallélépipédique, ce qui peut contraindre, vu son volume, à le fabriquer en une matière élastique moins raide que celle qui constitue les revêtements 49. Pour éviter cela et obtenir un plot 45 de volume plus réduit et mieux adapté à supporter les efforts en rotation, on peut utiliser, comme représenté aux figures 9 et 10, un plot cylindrique, ce qui permet d'utiliser la même matière --plus raide-- que celle qui constitue les revêtements 49.

Ceci étant, on comprend que le fonctionnement du support sera dans son principe sensiblement le même dans les deux variantes susdécrites.

Dans le cas d'efforts transversaux s'exerçant dans le sens des flèches T, ce qui tend à rapprocher les bords 42 l'un de l'autre, les revêtements 49 sont comprimés entre les rebords 42 et les portées 48 correspondantes, ce qui, vu leur faible épaisseur, assurera au système la rigidité transversale relativement grande souhaitée.

Dans le cas d'efforts longitudinaux s'exerçant dans un sens ou dans l'autre (flèches L), les rebords 42 sont amenés à se déplacer parallèlement l'un à l'autre et dans des sens inverses, ce qui fait pivoter la bielle 46 autour de son axe, ainsi que le plot central 45. La raideur du système est relativement faible, les revêtements 49 roulant sans frottement sur les rebords 42 correspondants ; le plot 45, qui subit une légère torsion et un cisaillement, assure l'essentiel de la faible rigidité requise dans cette direction.

Il est à noter que le mode de réalisation des figures 9 et 10 présente par rapport à celui des figures 6 à 8 l'avantage de permettre un léger pivotement des armatures 41 l'une par rapport à l'autre autour d'un axe qui est à la fois perpendiculaire à l'axe de symétrie de la bielle 46 et à sa direction longitudinale, sous l'action d'efforts verticaux.

Il est à souligner également que dans les deux modes de réalisation la rotation de la bielle 46 autour de son axe de symétrie n'entraîne aucune variation d'entraxe entre les revêtements 49 et par suite aucune contrainte n'est exercée sur les vis de fixation 44 lorsque des efforts longitudinaux s'exercent sur le support.

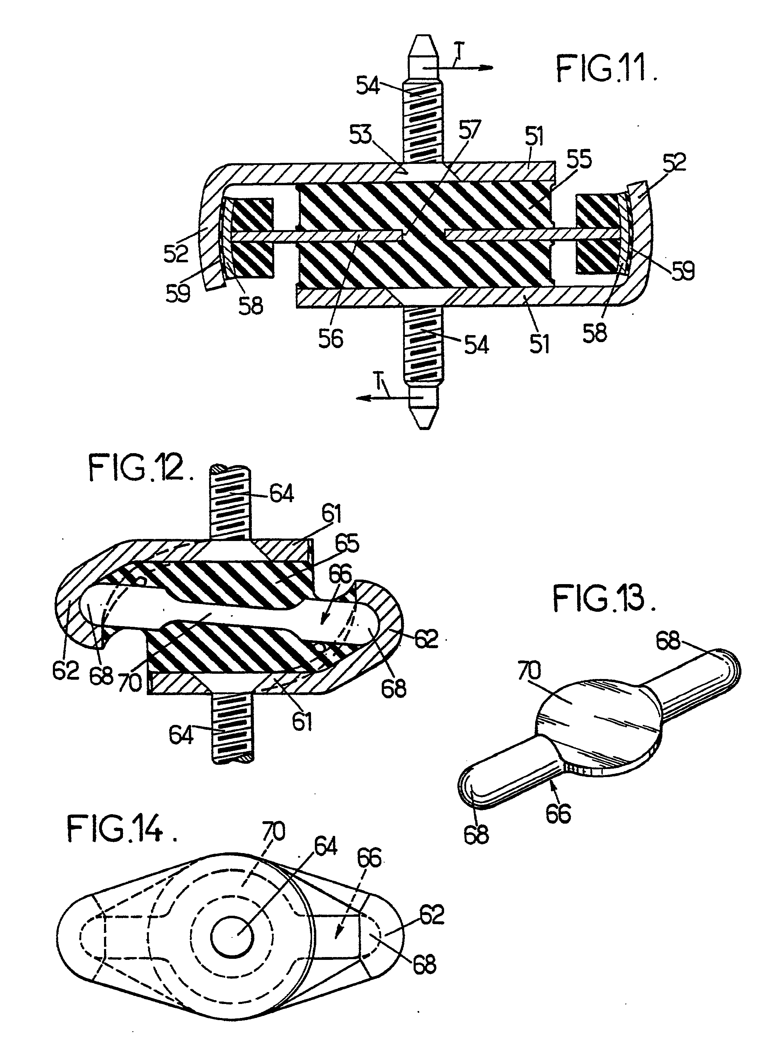

A la figure 11, qui est une vue analogue à celle des figures 6 et 9 et qui montre d'autres variantes, on a repris les mêmes références, mais augmentées de 10, pour désigner les mêmes parties du support ou les parties que se correspondent.

Le support de la figure 11 a été conçu pour obtenir une plus grande raideur en direction transversale. C'est pourquoi le revêtement 59 est extrêmement mince et peut se réduire même à une simple pellicule. Par ailleurs, on a voulu éviter les frottements, et les couinements qui peuvent en résulter, et qui seraient dus aux déplacements relatifs verticaux entre les parties 52 et 58. Pour ce faire, on a conféré aux rebords 52 une forme cylindrique (à génératrices perpendiculaires au plan de la figure), et une forme en calotte sphérique aux portées 58, ceci de sorte que, dans le plan de coupe de la figure 11, le revêtement 59 apparaîsse comme d'épaisseur constante.

C'est dans le même esprit qu'a été imaginé le mode de réalisation des figures 12 à 14, mais avec une bielle 66 simplifiée. Dans cette figure, on a encore repris les mêmes références que précédemment, mais encore augmentées de 10, pour désigner les mêmes parties du support ou des parties équivalentes.

La bielle 66 est constituée d'une simple barre d'acier arrondie à ses extrémités, en 68, et aplatie en son centre, en 70, pour constituer les surfaces d'adhésion au plot élastique central 65. Ce plot est lui même adhérisé entre les parties plates d'armatures 61 en forme de cuillers, montées tête-bêche et dont les rebords opposés 62 se recourbent chacun sur l'extrémité correspondante 68 de la bielle.

On évite ainsi tout frottement et tout risque de couinement à ce niveau. Pour garantir encore mieux un ferme ajustement de ces extrémités 68 de la bielle dans le creux des rebords 62, on peut monter la bielle en biais comme visible à la figure 12, lorsque le support n'est pas encore sous charge statique. Lorsqu'il sera mis sous charge, la bielle se mettra en position normale, parallèlement aux armatures 61, et ses extrémités 68 seront comprimées dans le creux des rebords 62, évitant ainsi tout risque de jeu.

Quant au principe, il est clair que ce support, comme celui de la figure 11, fonctionne essentiellement de la même façon que ceux des figures précédentes.

### Revendications

1. Support élastique à rigidités anisotropes, à savoir possédant dans deux directions (T, L) perpendiculaires l'une à l'autre --et appartenant au même plan-- des rigidités notablement différentes, ce support comportant deux armatures (1, 15, 41, 51, 61) propres à être fixées respectivement aux organes entre lesquels il est destiné à être intercalé, caractérisé en ce qu'il comporte entre lesdites armatures (1, 15, 41, 51, 61) au moins une bielle rigide à partie centrale plate (8, 21, 46, 56, 66), cette bielle pouvant pivoter autour d'un axe de symétrie perpendiculaire à ladite partie centrale, la direction générale de cette bielle étant transversale, à savoir --ledit support étant supposé au repos-- étant celle de la plus forte rigidité, aux deux extrémités opposées de cette bielle (8, 21, 46, 56, 66) étant prévues des articulations de butée (6, 9, 10; 22, 23, 25; 42, 48, 49; 52, 58, 59; 62, 68) propres à la relier respectivement à l'une et à l'autre desdites armatures (1, 15, 41, 51, 61) de sorte que ces extrémités puissent s'articuler sur elles au moins selon des axes perpendiculaires au plan précité, lorsque les deux armatures (1, 15, 41, 51, 61), sous l'effet des forces qui leur sont appliquées, se déplacent l'une par rapport à l'autre dans la direction (L) de plus faible rigidité, un plot central (7, 28, 45, 55, 65) à faible rigidité en torsion, traversé par ladite bielle (8, 21, 46, 56, 66) et adhérisé de part et d'autre de celle-ci, ayant ses deux extrémités opposées respectivement adhérisées auxdites armatures (1, 15, 41, 51, 61), assurant alors ladite faible rigidité dans cette direction (L) lors du pivotement de la bielle, tandis que la forte rigidité dans la direction (T) perpendiculaire à la précédente est assurée essentiellement par la rigidité en direction axiale de ladite bielle (8, 21, 46, 56, 66), par suite de la mise en butée de ses extrémités opposées respectives, au niveau desdites articulations (6, 9, 10; 22, 23, 25; 42, 48, 49; 52, 58, 59; 62, 68), sur les armatures (1,15,41,51,61) correspondantes.

2. Support selon la revendication 1, caractérisé en ce que lesdites articulations (6, 9, 10) comprennent un bloc de matière élastique annulaire (9) adhérisé entre une surface de révolution (10) prévue à l'extrémité de la bielle (8) et une surface de révolution coaxiale (6) solidaire de l'armature (1) correspondante, ce bloc élastique (9) étant ainsi adapté à subir, soit une compression ou une traction dans la direction générale (T) de la bielle lorsque, sous l'influence d'efforts extérieurs, les deux dites armatures (1) se déplacent l'une par rapport à l'autre dans cette direction, soit une torsion, par suite de la rotation de la bielle (8), lorsque les deux dites armatures (1) se déplacent l'une par rapport à l'autre dans une direction (L) perpendiculaire à la précédente (T) et située dans le même plan.

3. Support selon la revendication 2, caractérisé en ce que ladite surface de révolution prévue aux extrémités de la bielle (8) est élaborée sous la forme d'un plot (10), la surface de révolution coaxiale et solidaire de l'armature (1) correspondante ayant alors la forme d'une cuvette (6).

4. Support selon la revendication 3, caractérisé en ce que le plot (10) et la cuvette (6) sont de forme conique.

5. Support selon la revendication 3 ou 4, caractérisé en ce que la bielle (8) est constituée d'une tôle emboutie, une cavité (11) apparaissant alors à l'opposé du plot (10) prévu à chacune de ses extrémités, cette cavité (11), à chaque extrémité de la bielle (8), étant emplie de matière élastique constituant une butée de limitation de course (12) avec l'armature (1) opposée.

6. Support selon l'une quelconque des revendications précédentes, caractérisé en ce que des butées de fin de course en matière élastique (13) sont prévues entre des rebords appropriés (14) des deux armatures (1), pour en limiter les déplacements relatifs dans la direction (L) à faible rigidité.

7. Support élastique selon la revendication 1, caractérisé en ce que ladite bielle (21) comporte à ses extrémités deux logements cylindriques (22) propres à recevoir des articulations élastiques (23), lesquelles sont constituées chacune de deux bagues métalliques coaxiales, une bague extérieure (24) et une bague intérieure (25), entre lesquelles est adhérisée une bague de matière élastique (26), ladite bague extérieure (24) étant calée en rotation dans le logement cylindrique (22) correspondant de ladite bielle (21) tandis que la bague intérieure (25) est calée en rotation sur une armature (15).

8. Support selon la revendication 7, caractérisé en ce que ladite bague de matière élastique (26) est feuilletée par au moins une bague intermédiaire (27).

9. Support selon la revendication 7 ou 8, caractérisé en ce que lesdites armatures (15) sont constituées chacune d'un étrier à forte rigidité transversale, engagé sur une queue de fixation (30) d'un plot central (28), entre deux ailes (16) duquel étrier est rivetée ou boulonnée ladite bague intérieure (25) de l'articulation élastique (23) correspondante.

10. Support selon la revendication 1, caractérisé en ce que ladite bielle (46, 56) comporte à chacune de ses extrémités, et s'étendant de part et d'autre du plan de sa partie centrale, une portée (48,58) en forme de surface de révolution dont l'axe est confondu avec ledit axe de symétrie de la bielle, un revêtement mince (49, 59) de matière élastique de roulement étant adhérisé entre la surface extérieure de cette portée (48,58) et un rebord (42,52) de l'armature (41, 51) correspondante, lequel rebord est orienté dans la direction (L) selon laquelle le support doit présenter la plus faible rigidité.

11. Support selon la revendication 10, caractérisé en ce que ladite surface de révolution (48) est une portion de cylindre , ladite bielle (46) étant constituée d'une tôle plate aux extrémités de laquelle sont soudées deux portées (48) en portion de cylindre, et le rebord (42) étant plan.

12. Support selon la revendication 10, caractérisé en ce que ladite surface de révolution (48) est biconique, ladite bielle (46) étant constituée de deux tôles superposées soudées ensemble, et dont chaque extrémité est repliée vers l'intérieur sous la forme d'une portion de cône.

13. Support selon la revendication 10, caractérisé en ce que ladite surface de révolution (58) est en forme de calotte sphérique, le rebord (52) étant recourbé vers l'intérieur selon une forme en portion de cylindre ou analogue.

14. Support selon la revendication 1, caractérisé en ce que ladite bielle (66) est constituée d'une barre rigide dont les extrémités opposées (68) sont de forme arrondie, et en ce que lesdites armatures (61) ont la forme de cuillers disposées tête-bêche, dont les parties principales respectives constituent les parties de fixation des armatures, et dont des rebords respectifs recourbés vers l'intérieur (62), dans le creux desquels viennent se caler les extrémités correspondantes (68) de la bielle (66), constituent avec ces dernières les susdites articulations de butée (62, 68).

15. Support selon la revendication 14, caractérisé en ce que ladite barre (66) possède une partie centrale aplatie (70) noyée dans ledit plot central à faible rigidité en torsion (65).

**Patentansprüche**

1. Elastisches Lager mit anisotropen Steifigkeitseigenschaften, das in zwei senkrecht zueinander verlaufenden Richtungen (T, L) und in derselben Ebene beträchtlich voneinander abweichende Steifigkeiten aufweist, wobei das Lager zwei Stützarmaturen (1, 15, 41, 51, 61) enthält, die jeweils an den Elementen angebracht werden können, zwischen denen das Lager eingefügt werden soll, dadurch gekennzeichnet, daß zwischen den Stützarmaturen (1, 15, 41, 51, 61) wenigstens ein starrer Zwischenhebel (8, 21, 46, 56, 66) mit einem flachen mittleren Abschnitt vorhanden ist, der um eine Symmetrieachse schwenkbar ist, die senkrecht zu dem mittleren Abschnitt verläuft, wobei sich der Zwischenhebel allgemein in Querrichtung, nämlich, wenn das Lager in der Ruhestellung ist, in der Richtung mit der größten Steifigkeit erstreckt, wobei ferner an zwei entgegengesetzten Enden des Zwischenhebels (8, 21, 46, 56, 66) Schwenkanschläge (6, 9, 10, 22, 23, 25, 42, 48, 49, 52, 58, 59, 62, 68) vorgesehen sind, die geeignet sind, den Zwischenhebel mit der einen bzw. der anderen Armatur (1, 15, 41, 51, 61) so zu verbinden, daß die Enden sich an diesen wenigstens gemäß senkrecht zu der erwähnten Ebene verlaufenden Achsen bewegen können, wenn die beiden Stützarmaturen (1, 15, 41, 51, 61) sich unter der Wirkung von auf sie ausgeübten Kräften zueinander in der Richtung (L) mit der geringeren Steifigkeit verschieben, und daß das Lager einen mittleren Block (7, 28, 45, 55, 65) mit geringer Torsionssteifigkeit enthält, den der Zwischenhebel (8, 21, 46, 56, 66) durchdringt und der auf beiden Seiten an dem Zwischenhebel befestigt ist, wobei die Enden des Blockes an der einen bzw. anderen Stützarmatur (1, 15, 41, 51, 61) angebracht sind und der Block ebenfalls die geringe Steifigkeit in der Richtung (L) während der Drehung bzw. Schwenkbewegung des Zwischenhebels sicherstellt, während die hohe Steifigkeit in der Richtung (T) senkrecht zu der Richtung (L) im wesentlichen durch die Steifigkeit des Zwischenhebels (8, 21, 46, 56, 66) in axialer Richtung als Folge des Anschlags der entsprechenden Enden an die entsprechenden Armaturen (1, 15, 41, 51, 61) in Höhe der Schwenkanschläge (6, 9, 10, 22, 23, 25, 42, 48, 49, 52, 58, 59, 62, 68) sichergestellt wird.

2. Lager gemäß Anspruch 1, dadurch gekennzeichnet, daß die Schwenkanschläge (6, 9, 10) aus ringförmigen Blöcken (9) aus elastischem Material bestehen, die zwischen einer Umdrehungsoberfläche (10) am Ende des Zwischenhebels (8) und einer koaxial zu dieser liegenden Umdrehungsfläche (6) angebracht sind, die an der entsprechenden Stützarmatur (1) vorgesehen ist, so daß die Blöcke (9) aus elastischem Material unter dem Einfluß von von außen einwirkenden Kräften sowohl eine Druck- und eine Zugbeanspruchung des Zwischenhebels in der allgemeinen Richtung (T), unter deren Einwirkung sich die Stützarmaturen (1) zueinander in dieser Richtung verschieben, als auch eine Torsionsbeanspruchung infolge der Drehung des Zwischenhebels (8) aufnehmen können, wenn sich die beiden Stützarmaturen (1) zueinander in einer Richtung (L) verschieben, die senkrecht zu der Richtung (T) und in derselben Ebene verläuft.

3. Lager nach Anspruch 2, dadurch gekennzeichnet, daß die Umdrehungsoberfläche an den Endabschnitten des Zwischenhebels (8) nach Art einer Buchse (10) ausgebildet ist, während die an der Stützarmatur (1) vorgesehene entsprechende koaxiale Umdrehungsoberfläche die Form einer Küvette (6) hat.

4. Lager nach Anspruch 3, dadurch gekennzeichnet, daß die Buchse (10) und die Küvette (6) konisch geformt sind.

5. Lager nach Anspruch 3 oder 4, dadurch gekennzeichnet, daß der Zwischenhebel (8) aus einem tiefgezogenen Blech besteht, das Vertiefungen (11) enthält, die dann die Rückseite der Buchse (10) bilden, die an den Enden des Zwischenhebels vorgesehen sind und daß die Vertiefungen (11) mit elastischem Material ausgefüllt sind, das einen Anschlag (12) bildet, der den Ausschlag gegenüber der gegenüberliegenden Stützarmatur (1) begrenzt.

6. Lager nach einem der vorhergehenden Ansprüche, dadurch gekennzeichnet, daß zwischen umgebogenen Abschnitten (14) der beiden Stützarmaturen Anschläge (13) aus elastischem Material zur Begrenzung des Weges vorgesehen sind, um Relativbewegungen in der Richtung (L) mit geringer Steifigkeit zu begrenzen.

7. Lager nach Anspruch 1, dadurch gekennzeichnet, daß der Zwischenhebel (21) an seinen Enden mit zwei zylindrischen Lagern (22) zur Aufnahme von elastischen Schwenkgelenken (23) versehen ist, die aus jeweils zwei koaxialen Metallringen, einem äußeren Ring (24) und einem inneren Ring (28), bestehen, zwischen denen ein Ring (26) aus elastischem Material befestigt ist, wobei der äußere Ring (24) drehbar in dem entsprechenden zylindrischen Lager (22) des Zwischenhebels (21) sitzt, während der innere Ring (25) drehbar an einer der Stützarmaturen (15) angebracht ist.

8. Lager nach Anspruch 7, dadurch gekennzeichnet, daß der aus elastischem Material bestehende Ring (26) mittels wenigstens eines Zwischenringes (27) mehrschichtig ausgebildet ist.

9. Lager nach Anspruch 7 oder 8, dadurch gekennzeichnet, daß die Stützarmaturen (15) aus einem dreiseitigen Bügel mit großer Steifigkeit in Querrichtung bestehen, der an einem Befestigungsende (30) eines mittleren Blockes (28) angebracht ist, und daß zwischen zwei Flanschen (16) des Bügels der Zwischenring (25) des entsprechenden elastischen Gelenkes (23) eingefügt ist.

10. Lager nach Anspruch 1, dadurch gekennzeichnet, daß der Zwischenhebel (46, 56) an beiden Enden einen Schwenkanschlag (48, 58) enthält, der sich zu beiden Seiten der Ebene des mittleren Abschnittes erstreckt und die Form einer Umdrehungsoberfläche hat, deren Achse mit der Symmetrieachse des Zwischenhebels zusammenfällt, wobei zwischen der äußeren Oberfläche des Schwenkanschlages (48, 58) und einer umgebogenen Kante (42, 52) der entsprechenden Stützarmatur (41, 51) eine dünne Beschichtung (49, 59) aus elastischem Lagermaterial angeordnet ist und die umgebogene Kante in der Richtung (L) liegt, in der das Lager die geringste Steifigkeit aufweisen muß.

11. Lager nach Anspruch 10, dadurch gekennzeichnet, daß die Umdrehungsoberfläche (48) ein Zylinderabschnitt ist, wobei der Zwischenhebel (46) aus einem flachen Blech besteht, an dessen Enden zwei Lager (48) angeschweißt sind, die aus Zylinderabschnitten bestehen, und daß die umgebördelte Kante (42) eben ist.

12. Lager nach Anspruch 10, dadurch gekennzeichnet, daß die Umdrehungsoberfläche (48) die Form eines Doppelkonus hat, wobei beide Enden des Zwischengelenkes (46), das aus zwei übereinander angeordneten und zusammengeschweißten Blechen besteht, nach innen in Form eines konischen Abschnittes umgebogen sind.

13. Lager nach Anspruch 10, dadurch gekennzeichnet, daß die Umdrehungsoberfläche die Form einer Kugelkalotte hat, wobei der Rand (52) kurvenförmig in Form eines zylindrischen oder ähnlichen Abschnittes nach innen umgebogen ist.

14. Lager nach Anspruch 1, dadurch gekennzeichnet, daß das Zwischengelenk (66) aus einer starren Stange besteht, deren entgegengesetzte Enden (66) abgerundet sind, und daß die Stützarmaturen (61) die Form von entgegengesetzt liegenden Löffeln haben, deren Hauptteile die Befestigungsabschnitte der Armaturen bilden und deren Ränder (62), die kurvenförmig nach innen gebogen sind und in deren Hohlräumen sich die entsprechenden Enden (68) des Zwischenhebels (66) verklemmen, zusammen mit diesen die Schwenkgelenke (62, 68) bilden.

15. Lager nach Anspruch 14, dadurch gekennzeichnet, daß die Stange (66) einen mittleren abgeflachten Abschnitt (70) aufweist, der in den mittleren Block mit geringer Torsionssteifigkeit (65) eingebettet ist.

## Claims

1. A resilient support with anisotropic stiffness properties in that it has substantially different stiffnesses in two directions (T, L) perpendicular to each other and considered in the same plane, the said support comprising two armatures (1, 15, 41, 51, 61) which are adapted to be secured respectively to the members between which the support is to be interposed, characterised in that it includes between the said armatures (1, 15, 41, 51, 61) at least one rigid strut having a flat central portion (8, 21, 46, 56, 66), the said strut being able to pivot about an axis of symmetry perpendicular to the said central portion, the general direction of the said strut being transverse, that is to say being that of greatest stiffness when the said support is considered in a relaxed state, there being provided, at the two opposite ends of the said strut (8, 21, 46, 56, 66) articulation abutment elements (6, 9, 10; 22, 23, 25; 42, 48, 49; 52, 58, 59; 62, 68) which are adapted to connect it to each, respectively, of the said armatures (1, 15, 41, 51, 61) so that the said ends can articulate on them at least about axes perpendicular to the said plane, when the two armatures (1, 15, 41, 51, 61), under the influence of forces which are applied to them, are displaced with respect to each other in the direction (L) of lowest stiffness, with a central pad (7, 28, 45, 55, 65) having low torsional stiffness, being intersected by the said strut (8, 21, 46, 56, 66) and being adhesively secured to both sides of the latter, and having its two opposed ends respectively secured adhesively to the said armatures (1, 15, 41, 51, 61), whereby to ensure the said low stiffness in the said direction (L) during pivoting movement of the strut, while high rigidity in the direction (T) perpendicular to the foregoing is ensured essentially by the rigidity of the said strut (8, 21, 46, 56, 66) in the axial direction due to its respective opposed ends being in abutment on the corresponding armatures (1, 15, 41, 51, 61) in the region of the said articulations (6, 9, 10; 22, 23, 25; 42, 48, 49; 52, 58, 59; 62, 68).

2. A support according to claim 1, characterised in that the said articulations (6, 9, 10) include an annular block (9) of resilient material which is adhesively secured between a surface of revolution (10) provided at the end of the strut (8) and a coaxial surface of revolution (6) which is fixed with respect to the corresponding armature (1), the said resilient block (9) being thus adapted to undergo either compression or tension in the general direction (T) of the strut when, under the influence of external forces, the two said armatures (1) are displaced with respect to each other in the said direction, or to undergo torsion due to the rotation of the strut (8) when the two said armatures (1) are displaced with respect to each other in a direction (L) perpendicular to the foregoing (T) and lying in the same plane.

3. A support according to claim 2, characterised in that the said surface of revolution provided at the ends of the strut (8) is developed in the form of a boss (10), the surface of revolution coaxial with and fixed with respect to the corresponding armature (1) then being in the shape of a bowl (6).

4. A support according to claim 3, characterised in that the boss (10) and the bowl (6) are of conical form.

5. A support according to claim 3 or claim 4, characterised in that the strut (8) comprises a metal pressing, such that a cavity (11) is defined facing away from the boss (10) provided at each of its ends, the said cavity (11) at each end of the strut (8) being filled with resilient material constituting an abutment (12) for limiting movement of the opposite armature (1).

6. A support according to any one of the preceding claims, characterised in that end stop abutments (13) of resilient material are provided between appropriate flanges (14) of the two armatures (1) so as to limit their relative displacements in the direction (L) of low stiffness.

7. A resilient support according to claim 1, characterised in that the said strut (21) includes at its ends two cylindrical housing elements (22) which are adapted to receive resilient articulation members (23), each of which comprises two coaxial metallic rings, an outer ring (24) and an inner ring (25), between which a ring (26) of resilient material is adhesively secured, the said outer ring (24) being mounted rotatably in the corresponding cylindrical housing element (22) of the said strut (21), while the inner ring (25) is mounted rotatably on one armature (15).

8. A support according to claim 7, characterised in that the said ring (26) of resilient material is interleaved with at least one intermediate ring (27).

9. A support according to claim 7 or claim 8, characterised in that each of the said armatures (15) comprises a stirrup having high transverse stiffness, engaged on a fastening bolt (30) of a central pad (28), the said inner ring (25) of the corresponding resilient articulation member (23) being riveted or bolted between two wings (16) of the said stirrup.

10. A support according to claim 1, characterised in that the said strut ( 46, 56 ) includes at each of its ends, and extending on either side of the plane of its central portion, a support element (48, 58) defining a surface of revolution the axis of which is coincident with the said axis of symmetry of the strut, a thin rolling element (49, 59 ) of resilient material being adhesively applied between the outer surface of the said support element (48, 58) and a flange (42, 52) of the corresponding armature (41, 51 ), wherein the said flange is orientated in the direction (L) in which the support is to have the lowest stiffness.

11. A support according to claim 10, characterised in that the said surface of revolution (48) is a portion of a cylinder, the said strut (46) comprising a flat plate element, to the ends of which there are welded two support elements (48) defining a portion of a cylinder, and the flange (42) being flat.

12. A support according to claim 10, characterised in that the said surface of revolution (48) defines portions of two opposed cones, the said strut (46) comprising two plate members superimposed on each other and welded together, and each end of which is bent inwardly in the form of a portion of a cone.

13. A support according to claim 10, characterised in that the said surface of revolution (58) has the shape of a spherical watch case, the flange (52) being curved inwardly to define the shape of a portion of a cylinder or the like.

14. A support according to claim 1, characterised in that the said strut (66) comprises a rigid bar the opposite ends (68) of which are of rounded form, and in that the said armatures (61) have the shape of spoons arranged head to toe, the respective principal portions of which constitute the fastening portions of the armatures, their respective inwardly curved flanges (62), in the hollows of which the corresponding ends (68) of the strut (66) are received, constituting with the said ends of the strut the said articulation abutment elements (62, 68).

15. A support according to claim 14, characterised in that the said bar (66) has a flattened central portion (7) which is embedded in the said central pad (65) having low torsional stiffness.

FIG.1.

FIG.2.

FIG.3.

FIG.4.

FIG.5.

FIG.6.

FIG.7.

FIG.8.

# FIG.9.

# FIG.10.

FIG.11.

FIG.12.

FIG.13.

FIG.14.